(19) Europäisches Patentamt

**European Patent Office**

Office européen des brevets

(11) Numéro de publication : **0 006 793**
**B1**

## (12) FASCICULE DE BREVET EUROPÉEN

(45) Date de publication du fascicule du brevet :
17.06.81

(21) Numéro de dépôt : **79400383.0**

(22) Date de dépôt : **12.06.79**

(51) Int. Cl.³ : **G 02 F   1/17**

(54) Procédé de commande d'une cellule d'affichage électrolytique utilisant un courant de fuite pour l'effacement et circuit mettant en oeuvre ce procédé.

(30) Priorité : **19.06.78 FR 7818222**

(43) Date de publication de la demande :
**09.01.80 (Bulletin 80/01)**

(45) Mention de la délivrance du brevet :
**17.06.81 Bulletin 81/24**

(84) Etats contractants désignés :
**AT CH DE GB IT NL SE**

(56) Documents cités :
**EP - A - 0 001 362**
**DE - A - 2 733 529**
**FR - A - 2 260 167**
**US - A - 4 132 465**
**SID INTERNATIONAL SYMPOSIUM : digest of
technical papers,**
**Vol. 9 (San Francisco 18-20 avril 1978) Los Angeles US**
**A.G. ARELLANO et al. « A Refreshed Matrix-
Adressed Electrochromic Display », pages 22-23**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Delapierre, Gilles
216 Percevalière
F-38170 Seyssinet (FR)**
Inventeur : **Meyer, Robert
Chemin Bonatière Saint Nazaire Les Eyms
F-38330 Saint Ismier (FR)**

(74) Mandataire : **Mongredien, André et al
c/o Brevatome 25, rue de Ponthieu
F-75008 Paris (FR)**

EP 0 006 793 B1

Imprimerie Jouve, 17, rue du Louvre, 75001 Paris, France

Procédé de commande d'une cellule d'affichage électrolytique utilisant un courant de fuite pour l'effacement et circuit mettant en œuvre ce procédé

La présente invention a pour objet un procédé de commande d'une cellule d'affichage électrolytique et un circuit pour sa mise en œuvre. Elle trouve une application dans l'affichage de caractères alphanumériques ou analogiques.

Une cellule d'affichage électrolytique comprend, très schématiquement, un électrolyte (généralement un sel métallique), inséré entre des électrodes semi-transparentes de forme appropriée et une contre-électrode. Une source de tension permet de porter les électrodes à des potentiels déterminés dans le but de provoquer soit le dépôt d'un film métallique (pour l'affichage d'un signe), soit la redissolution de ce film (pour effacer le signe affiché).

Dans un tel moyen d'affichage, l'épaisseur du film métallique déposé est directement proportionnelle à la charge électrique qui a traversé la cellule dans le sens de l'écriture. L'effacement complet de ce film nécessite donc qu'une charge égale traverse la cellule, mais dans le sens contraire. Un défaut de charge à l'effacement conduit à une accumulation de métal sur l'électrode et, inversement, un excès de charge à l'effacement conduit à des réactions secondaires dans l'électrolyte.

Dans le cas où le sel métallique est un halogénure métallique, par exemple un halogénure d'argent comme l'iodure ou le bromure d'argent, l'iode ou le brome qui peut se dégager dans la solution électrolytique au cours desdites réactions parasites, ne présente pas véritablement de danger pour le dispositif car il se recombine avec l'argent des couches déposées ou avec celui de la contre-électrode.

Cette propriété et cet intérêt des halogénures d'argent sont mentionnés notamment dans la demande de brevet français EN 76 18919 du 22 juin 1976 au nom du même demandeur et publiée sous le numéro 2 356 227.

Si l'excès de charge à l'effacement peut donc n'être pas un inconvénient à l'égard de la composition de la solution électrolytique, il limite cependant la vitesse de commutation de l'afficheur. En effet, il est préférable, si l'on désire avoir une bonne uniformité d'aspect de l'afficheur, d'attendre, pour commander l'écriture sur une électrode, que tout l'iode ou le brome formé antérieurement sur celle-ci, se soit recombiné chimiquement avec l'argent. Ce temps d'attente est d'autant plus long que le dépassement de charges à l'effacement a été important.

On tente donc, en définitive, de réduire ce dépassement. Or, cette réduction se heurte à deux difficultés :

1) il est difficile, dans la pratique, de réaliser l'égalité parfaite des charges à l'écriture et à l'effacement. Seule l'alimentation à travers un condensateur en série avec l'afficheur permet d'y parvenir de façon simple, comme il est décrit dans la demande de brevet français EN 77 27851, déposée le 15 septembre 1977 et intitulée « Procédé de commande d'une cellule d'affichage électrolytique et circuit de mise en œuvre » publiée sous le numéro 2 403 611. Mais cette solution, pour satisfaisante qu'elle soit à l'égard de l'égalité des charges d'écriture et d'effacement, présente néanmoins l'inconvénient de conduire à un circuit électronique de commande qui n'est pas intégrable avec la technologie actuelle, du fait de la présence du condensateur ;

2) l'expérience montre que, si pour une cellule parfaite on peut envisager l'égalité des charges d'écriture et d'effacement, en revanche, pour une cellule réelle qui présente nécessairement des défauts ponctuels et invisibles à l'œil, l'argent peut être plus difficile à redissoudre sur ces défauts qu'ailleurs ; il est donc souhaitable de laisser se former de l'iode ou du brome en quantité raisonnable au voisinage des électrodes afin de redissoudre chimiquement les quelques grains d'argent qui ont échappé à la dissolution électrochimique principale. On ne peut donc pas annuler complètement le dépassement dans la pratique.

La présente invention a justement pour but un procédé et un dispositif qui tirent parti de l'effet bénéfique de la présence d'iode ou de brome (et plus généralement de la présence de l'halogène correspondant à l'halogénure métallique utilisé dans l'électrolyte) au voisinage des électrodes à la fin de la période d'effacement, tout en permettant un fonctionnement plus rapide du dispositif. A cette fin, l'invention préconise l'utilisation d'un faible courant de fuite à travers la cellule, dans le sens de l'effacement, et cela au moins pendant les périodes de maintien de l'état effacé.

De façon plus précise, la présente invention a pour objet un procédé de commande d'une cellule d'affichage électrolytique à halogénure métallique, procédé dans lequel on fait circuler à travers la cellule un courant électrique de commande dirigé dans un premier sens pendant des périodes d'effacement et dans le sens opposé pendant des périodes d'écriture, et un courant de commande nul pendant des périodes de maintien de l'état effacé et des périodes de maintien de l'état écrit, caractérisé en ce qu'on superpose audit courant de commande un faible courant de fuite qui traverse la cellule dans ledit premier sens, au moins pendant les périodes de maintien de l'état effacé.

Par « faible courant » on entend un courant allant de quelques nA/mm² à quelques dizaines de nA/mm².

Dans une première variante les charges d'écriture et de lecture sont égales, ce qui peut être obtenu notamment au moyen de la charge et de la décharge d'un condensateur comme décrit dans la demande de brevet citée plus haut. Dans cette variante, le faible courant de fuite n'est appliqué que sur les segments effacés.

Dans une variante plus simple, le courant de fuite est envoyé sur toutes les électrodes de la cellules, c'est-à-dire à la fois pendant les périodes d'écriture et les périodes d'effacement. Dans cette variante, il faut utiliser un courant de fuite tel que la dissolution d'argent sur les électrodes écrites, pendant la durée maximale de rétention de l'information, soit négligeable. Ce courant peut être par exemple de 10 nA/mm².

Cette variante présente, en plus de sa simplicité, l'avantage de donner un dépassement en fin d'effacement d'autant plus grand que l'information varie lentement ; en effet, plus l'électrode est restée écrite longtemps, plus la quantité d'argent redissout est grande.

Naturellement, dans cette seconde variante, on peut utiliser une charge d'effacement plus grande que celle d'écriture, de façon à conserver une certaine marge de sécurité.

La présente invention a également pour objet un circuit de commande d'une cellule d'affichage électrolytique à halogénure métallique, ce circuit mettant en œuvre le procédé qui vient d'être défini. Ce circuit comprend des moyens pour faire circuler à travers la cellule un courant électrique de commande dirigé dans un premier sens pendant des périodes d'effacement et dans le sens opposé pendant des périodes d'écriture et un courant de commande nul pendant des périodes de maintien de l'état effacé et des périodes de maintien de l'état écrit ; ce circuit est caractérisé en ce qu'il comprend en outre un moyen pour superposer audit courant de commande un faible courant de fuite dirigé dans ledit premier sens, au moins les périodes de maintien de l'état effacé.

De toute façon, les caractéristiques et avantages de l'invention apparaîtront mieux après la description qui suit, d'exemples de réalisation donnés à titre explicatif et nullement limitatif. Cette description se réfère à des dessins annexés sur lesquels :

— la figure 1 représente un schéma de circuit permettant d'appliquer un courant de fuite sur les seules électrodes effacées ;

— la figure 2 représente un schéma d'un autre circuit permettant d'appliquer en permanence un courant de fuite dans le cas où le circuit de commande utilise un condensateur de charge et de décharge ;

— la figure 3 représente un schéma de circuit permettant d'appliquer en permanence un courant de fuite dans le cas où le circuit de commande est classique ;

— la figure 4 représente une variante du circuit précédent dans laquelle le courant de fuite est interrompu en dehors des périodes d'effacement ;

— la figure 5 représente encore une autre variante de ce circuit.

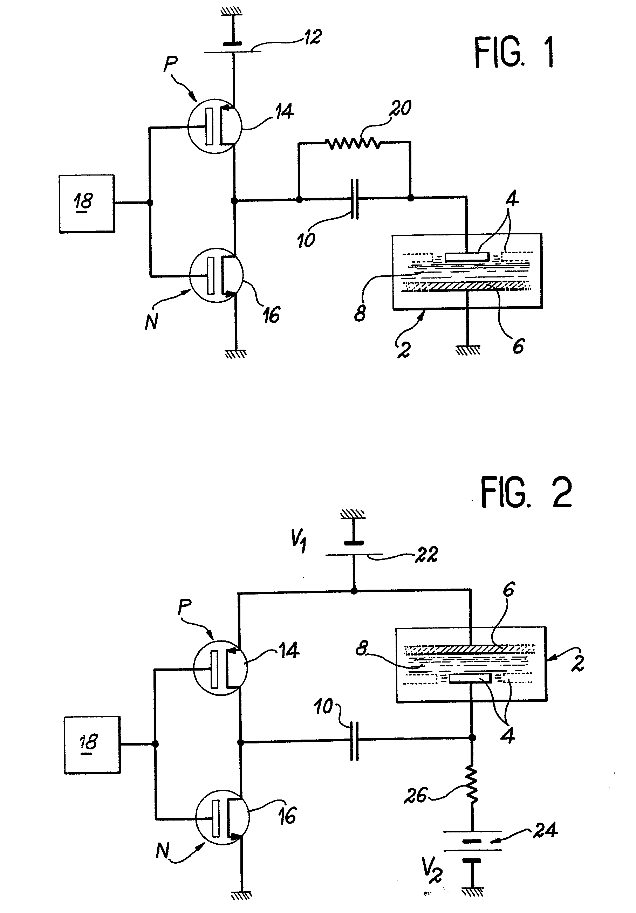

Le circuit représenté sur la figure 1 permet de commander une cellule d'affichage électrolytique 2 constituée d'une pluralité d'électrodes transparentes 4, d'une contre-électrode 6 et d'une solution électrolytique 8. Le circuit comprend un condensateur 10, une source 12 de tension continue de valeur V, un transistor MOS 14 de type P, un transistor MOS 16 de type N, un circuit électronique de commande 18, une résistance de fuite 20, de valeur $R_f$ placée en parallèle sur le condensateur 10.

Le fonctionnement de ce circuit est le suivant :

Lorsque le transistor 14 est rendu conducteur, le condensateur 10 se charge en donnant lieu à un courant à travers la cellule, dans le sens de l'effacement ; tant que le transistor 14 reste conducteur, l'information est effacée et la résistance 20 voit une différence de potentiel de l'ordre de +V. Un petit courant voisin de $V/R_f$ circule alors dans la cellule dans le sens de l'effacement.

Pour écrire une information, on bloque le transistor 14 et on rend le transistor 16 conducteur ; c'est alors le courant de décharge du condensateur 10 qui provoque l'écriture. Lorsqu'on reste dans cette situation aucun générateur n'étant présent dans la boucle transistor 16-condensateur 10-cellule 2, aucun courant ne circule dans la cellule et l'on est dans une période de maintien de l'état écrit.

Le circuit représenté sur la figure 2 est apte à commander une cellule d'affichage électrolytique 2 qui est identique à celle de la figure 1. Ce circuit comprend encore un condensateur 10, un transistor MOS 14 de type P, un transistor MOS 16 de type N et un circuit de commande 18. Le fonctionnement de cet ensemble est identique à celui de la figure 1. Le circuit représenté comprend en outre une première source de tension 22 de valeur $V_1$ et une seconde source de tension 24 de valeur $V_2$ supérieure à $V_1$. Une résistance 26, de valeur $R_f$ est disposée entre la seconde source 24 et la cellule. Il circule donc en permanence dans la cellule un petit courant d'effacement de valeur $\dfrac{V_2 - V_1}{R_f}$

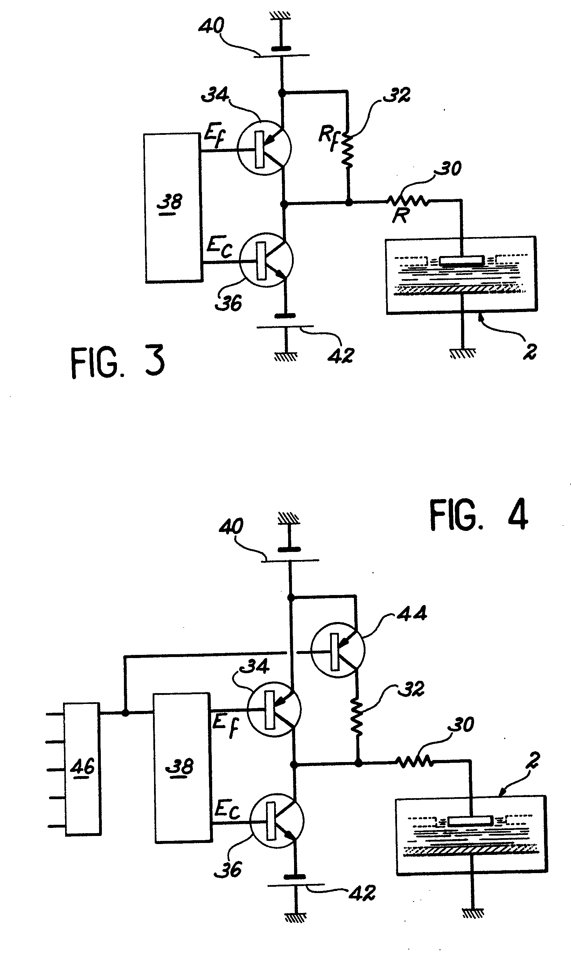

Le circuit représenté sur la figure 3 alimente une cellule d'affichage électrolytique 2 et il comprend une résistance 30 de valeur R, une résistance de fuite 32, de valeur $R_f$ très supérieure à R, un transistor 34 de type PNP, un transistor 36 de type NPN, un circuit de commande 38 de ces transistors, une source de tension 40 de valeur +V et une source de tension 42 de valeur −V. Le transistor 34 est commandé par un signal véhiculé par une connexion d'effacement Ef reliée à la base du transistor. Le transistor 36 est commandé par un autre signal véhiculé par une connexion d'écriture Ec, également reliée à la base du transistor. Le circuit 38 applique sur les connexions Ef et Ec des tensions égales soit à +V, soit à −V, selon que l'on désire obtenir une période d'écriture, d'effacement ou de mémorisation. Le tableau ci-dessous précise l'état de la commande en fonction des tensions appliquées :

| Ef | Ec | ETAT |
|----|----|------|
| + V | + V | écriture |
| − V | − V | effacement |
| + V | − V | mémorisation |

La présence de la résistance 32, de valeur $R_f$ entraîne l'existence d'un courant faible de l'ordre de $V/R_f$, dans le sens de l'effacement. La résistance 32 peut être éventuellement remplacée par un transistor convenablement dimensionné.

Le circuit représenté sur la figure 4 comprend les mêmes éléments que celui de la figure précédente avec, en plus, un transistor 44 qui permet d'interrompre le courant de fuite dans certains cas. Pour cela, la base de ce transistor est réunie à un décodeur 46, lequel alimente de manière connue le circuit de commande 38. Ce décodeur délivre des signaux de tension « 1 » ou « 0 » au circuit 38 pour que celui-ci délivre des tensions appropriées sur les connexions Ef et Ec telles que décrites dans le tableau précédent. Par exemple, le circuit 46 délivre un « 0 » pour une électrode qui doit être effacée et un « 1 » pour une électrode qui doit être écrite. Dans le cas illustré, le transistor 44 est bloqué (et le courant de fuite est alors interrompu) lorsque l'électrode est en période d'écriture.

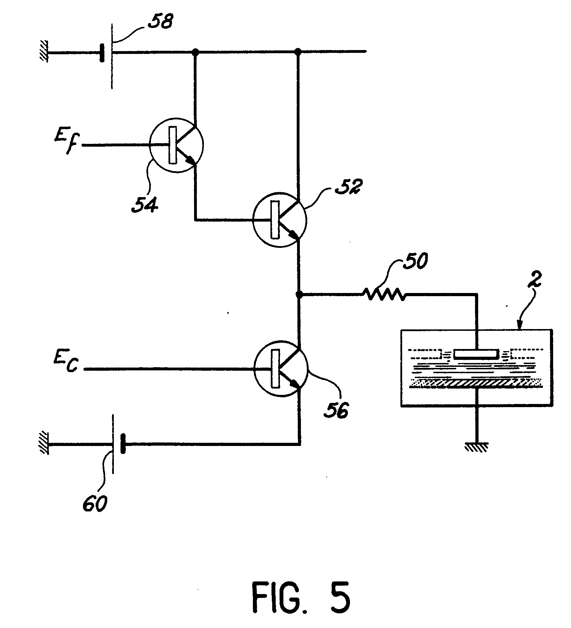

le circuit représenté sur la figure 5 comprend une résistance 50, des transistors d'effacement 52 et 54, un transistor d'écriture 56, deux piles 58 et 60 d'environ 1,5 V et deux connexions Ef et Ec de commande d'effacement et d'écriture.

La chute de tension émetteur-base des transistors d'effacement 52 et 54 est d'environ 0,4 V pour un courant d'émetteur faible, ce qui laisse subsister, sur l'afficheur 2, une tension d'environ 0,7 V qui est légèrement supérieure à la tension nécessaire 0,7 V qui est légèrement supérieure à la tension nécessaire à la formation électrochimique d'iode sur l'électrode. Ainsi, par un tel circuit, une électrode à effacer ou effacée est maintenue en permanence à une tension de l'ordre de 0,7 V, ce qui provoque un courant assez élevé à travers la cellule tant qu'une couche d'argent recouvre l'électrode et la dissolution s'opère, et un faible courant de fuite dès que la couche d'argent a disparu.

L'application d'une tension d'effacement légèrement supérieure à la tension de formation de l'halogène pour provoquer l'effacement d'une cellule d'affichage électrolytique à halogène métallique fait l'objet de la demande de brevet français EN 78 18 223 déposée le 19 juin 1978 et publiée sous le numéro 2 432 194.

Cette tension d'effacement peut éventuellement être asservie à l'impédance d'une électrode de référence disposée dans la cellule, comme décrit dans la demande de brevet français EN 78 18 224 déposée le 19 juin 1978 et publiée sous le numéro 2 432 195.

## Revendications

1. Procédé de commande d'une cellule d'affichage électrolytique à halogénure métallique, dans lequel on fait circuler à travers la cellule un courant électrique de commande dirigé dans un premier sens pendant des périodes d'effacement et dans le sens opposé pendant des périodes d'écriture et un courant de commande nul pendant des périodes de maintien de l'état effacé et des périodes de maintien de l'état écrit, caractérisé en ce qu'on superpose audit courant de commande un faible courant de fuite qui traverse la cellule dans ledit premier sens correspondant à l'effacement, au moins pendant les périodes de maintien de l'état effacé.

2. Procédé selon la revendication 1, caractérisé en ce que ledit courant de commande résulte de la charge et de la décharge d'un condensateur à travers la cellule.

3. Procédé selon la revendication 1, caractérisé en ce qu'on fait circuler le courant de fuite en permanence à travers la cellule.

4. Procédé selon la revendication 1, caractérisé en ce qu'on applique à la cellule une tension d'effacement légèrement supérieure à la tension de formation électrochimique de l'halogène.

5. Procédé selon la revendication 4, caractérisé en ce que la tension d'effacement appliquée est asservie à l'impédance d'une électrode de référence disposée dans la cellule.

6. Circuit de commande d'une cellule d'affichage électrolytique à halogénure métallique, mettant en œuvre le procédé de la revendication 1, et comprenant des moyens pour faire circuler à travers la cellule un courant électrique de commande dirigé dans un premier sens pendant des périodes d'effacement et dans le sens opposé pendant des périodes d'écriture et un courant de commande nul pendant des périodes de maintien de l'état effacé et des périodes de maintien de l'état écrit, caractérisé en ce qu'il comprend en outre un moyen pour engendrer et superposer audit courant de commande un faible courant de fuite dirigé dans ledit premier sens correspondant à l'effacement, au moins pendant les périodes de maintien de l'état effacé.

7. Circuit de commande selon la revendication 6, caractérisé en ce que ledit moyen pour engendrer le courant de fuite est relié en permanence à la cellule.

8. Circuit de commande selon l'une quelconque des revendications 6 et 7, caractérisé en ce que lesdits moyens pour faire circuler le courant de commande à travers la cellule comprennent un circuit de charge et de décharge d'un condensateur à travers la cellule.

9. Circuit selon la revendication 6, caractérisé en ce qu'il comprend une source de tension d'effacement légèrement supérieure à la tension de formation électrochimique de l'halogène et un organe de commutation apte à relier les électrodes à effacer à ladite source.

10. Circuit selon la revendication 9, caractérisé en ce que ladite source est asservie à l'impédance d'une électrode de référence disposée dans la cellule.

## Claims

1. A method of control of a metal halide electrolytic display cell in which an electric control current is passed through the cell in a first direction during periods of erasure and in the opposite direction during writing periods, a zero control current being maintained during periods of holding in the erased state and during periods of holding in the written state, wherein a low leakage current is superimposed on said control current and passes through the cell in said first direction corresponding to erasure, at least during the periods of holding in the erased state.

2. A method according to claim 1, wherein said control current results from the charge and discharge of a capacitor through the cell.

3. A method according to claim 1, wherein the leakage current is passed continuously through the cell.

4. A method according to claim 1, wherein an erasure voltage which is slightly higher than the electrochemical halogen formation voltage is applied to the cell.

5. A method according to claim 4, wherein the applied erasure voltage is controlled in dependence on the impedance of a reference electrode placed within the cell.

6. A control circuit for a metal halide electrolytic display cell, said circuit being intended to carry out the method of claim 1 and comprising means whereby an electric control current is passed through the cell in a first direction during erasure periods and a zero control current is maintained during periods of holding in the erased state and during periods of holding in the written state, wherein said control circuit further comprises means whereby a low leakage current is generated and superimposed on said control current, said leakage current being directed in said first direction corresponding to erasure at least during the periods of holding in the erased state.

7. A control circuit according to claim 6, wherein said means for generating the leakage current is continuously connected to the cell.

8. A control circuit according to claim 6, wherein said means for passing the control current through the cell comprise a circuit for charging and discharging a capacitor through said cell.

9. A circuit according to claim 6, wherein said circuit comprises an erasure voltage source which is slightly higher than the electrochemical halogen formation voltage and a switching element for connecting the electrodes to be erased to said source.

10. A circuit according to claim 9, wherein said source is controlled in dependence on the impedance of a reference electrode placed within the cell.

**Ansprüche**

1. Verfahren zum Steuern einer mit einem Metall-hologenid arbeitenden elektrolytischen Bildzelle, bei welchem ein elektrischer Steuerstrom während der Löschperioden in einer ersten Richtung und während der Schreibperioden in entgegengesetzter Richtung und während der Halteperioden im Lösch- und Schreibzustand ein Null-Steuerstrom durch die Zelle hindurchgeleitet wird, dadurch gekennzeichnet, daß dem Steuerstrom ein schwacher Kriechstrom überlagert und wenigstens während der Halteperioden im Löschzustand in der ersten, das Löschen bewirkenden Richtung durch die Zelle hindurchgeleitet wird.

2. Verfahren nach Anspruch 1, dadurch gekennzeichnet, daß der Steuerstrom durch die Aufladung und die Entladung eines Kondensators durch die Zelle hindurch erzeugt wird.

3. Verfahren nach Anspruch 1, dadurch gekennzeichnet, daß der Kriechstrom kontinuierlich durch die Zelle hindurchgeleitet wird.

4. Verfahren nach Anspruch 1, dadurch gekennzeichnet, daß die an die Zelle gelegte Löschspannung etwas höher ist als die zur elektrochemischen Bildung des Halogens notwendige Spannung.

5. Verfahren nach Anspruch 4, dadurch gekennzeichnet, daß die angelegte Löschspannung auf die Impedanz einer in der Zelle angeordneten Bezugselektrode abgestimmt wird.

6. Schaltungsanordnung für die Steuerung einer mit einem Metallhalogenid arbeitenden elektrolytischen Bildzelle unter Durchführung des Verfahrens nach Anspruch 1, mit Einrichtungen zum Hindurchleiten eines elektrischen Steuerstroms während der Löschperioden in einer ersten und während der Schreibperioden in einer entgegengesetzten Richtung und während der Halteperioden im Lösch- und Schreibzustand eines Null-Steuerstroms durch die Zelle hindurch, gekennzeichnet durch eine Einrichtung. zum Erzeugen eines den Steuerstrom überlagernden, schwachen Kriechstroms und zum Hindurchleiten desselben durch die Zelle in der ersten, das Löschen bewirkenden Richtung wenigstens während der Halteperioden im Löschzustand.

7. Schaltungsanordnung nach Anspruch 6, dadurch gekennzeichnet, daß die Einrichtung zum Erzeugen des Kriechstroms dauernd mit der Zelle verbunden ist.

8. Schaltungsanordnung nach Anspruch 6 oder 7, dadurch gekennzeichnet, daß die Einrichtungen zum Hindurchleiten des Steuerstroms durch die Zelle einen Schaltungskreis zum Aufladen und Entladen eines Kondensators durch die Zelle hindurch aufweisen.

9. Schaltungsanordnung nach Anspruch 6, dadurch gekennzeichnet, daß sie eine Löschspannungsquelle, deren Spannung etwas höher ist als die für die elektrochemische Bildung des Halogens benötigte Spannung, sowie eine Schalteinrichtung zum Verbinden der zu löschenden Elektroden mit der Spannungsquelle aufweist.

10. Schaltungsanordnung nach ·Anspruch 9, dadurch gekennzeichnet, daß die Spannungsquelle auf die Impedanz einer in der Zelle angeordneten Bezugselektrode abgestimmt ist.

1/3

FIG. 1

FIG. 2

FIG. 3

FIG. 4

FIG. 5